# EUROPÄISCHE PATENTANMELDUNG

(11) **EP 3 839 369 A1**
(43) Veröffentlichungstag der Anmeldung: **23.06.2021**
(21) Anmeldenummer: 19216741.9
(22) Anmeldetag: 16.12.2019
(51) Int. Cl.: F24H 7/02, F28D 20/00, F24H 7/00, F24H 7/04, F24H 9/06, F28F 9/007

(54) **ENERGIESPEICHER ZUM SPEICHERN ELEKTRISCHER ENERGIE ALS WÄRME UND VERFAHREN HIERZU**

(71) Anmelder: Zwinkels, Andrew, 10827 Berlin (DE)
(72) Erfinder: Zwinkels, Andrew, 10827 Berlin (DE)
(74) Vertreter: Ridderbusch, Oliver

(57) **Zusammenfassung**

Ein Energiespeicher zum Speichern von elektrischer Energie als Wärme umfasst: einen elektrischen Heizer (10) zum Umwandeln von elektrischer Energie in Wärme; Wärmespeicherkörper (20), welche durch die Wärme erwärmt werden; ein Fundament (70), über welchem die Wärmespeicherkörper (20) angeordnet sind; einen Nutzenergie-Wärmetauscher (40) zum Ausgeben von Wärmeenergie aus dem Energiespeicher; eine Stütze (75), welche mittels des Fundaments (70) getragen wird und die Wärmespeicherkörper (20) beabstandet vom Fundament (70) hält, und mindestens einen Abwärme-Wärmetauscher (80, 81) zur Kühlung des Fundaments (70), wobei der Abwärme-Wärmetauscher (80, 81) im Fundament (70) oder zwischen dem Fundament (70) und den Wärmespeicherkörpern (20) angeordnet ist. Ein entsprechendes Verfahren wird beschrieben.

## Beschreibung

### TECHNISCHES GEBIET

Die vorliegende Erfindung bezieht sich auf einen Energiespeicher zum Speichern von elektrischer Energie als Wärme. Außerdem betrifft die Erfindung ein entsprechendes Verfahren.

### HINTERGRUND

Im Zuge der verstärkten Nutzung regenerativer Energiequellen, insbesondere Wind- und Sonnenenergie, kommt es zu stärkeren Fluktuationen der erzeugten Elektrizitätsmenge. Daher nimmt die Bedeutung von Energiespeichern zum Speichern überschüssiger elektrischer Energie immer weiter zu. Für den verstärkten Umstieg auf regenerative Energiequellen kommt Energiespeichern eine Schlüsselrolle zu. Elektrochemische Speicher (Batterien) können trotz hoher Kosten nur verhältnismäßig geringe Energiemengen speichern. Weit größere Energiemengen können in Form von Wärmeenergie zwischengespeichert werden. In Zeiten geringerer Gewinnung von elektrischer Energie, beispielsweise bei Windflauten oder mangelnder Sonneneinstrahlung, kann die Wärmeenergie optional wieder teilweise in elektrische Energie umgewandelt werden; alternativ oder ergänzend kann sie auch für Heizzwecke genutzt werden.

Ein gattungsgemäßer Energiespeicher zum Speichern von elektrischer Energie als Wärme umfasst:
- einen elektrischen Heizer zum Umwandeln von elektrischer Energie in Wärme;
- Wärmespeicherkörper, welche durch die Wärme erwärmt werden;
- ein Fundament, über welchem die Wärmespeicherkörper angeordnet sind; und
- einen Nutzenergie-Wärmetauscher zum Ausgeben von Wärmeenergie aus dem Energiespeicher.

In entsprechender Weise umfasst ein gattungsgemäßes Verfahren zum Betreiben eines Energiespeichers zum Speichern von elektrischer Energie als Wärme die folgenden Schritte:
- Umwandeln von elektrischer Energie in Wärme durch einen elektrischen Heizer;
- Erwärmen von Wärmespeicherkörpern durch die Wärme, die vom elektrischen Heizer erzeugt wird; und
- Ausgeben von Wärmeenergie aus dem Energiespeicher durch einen Nutzenergie-Wärmetauscher;
wobei die Wärmespeicherkörper über einem Fundament angeordnet sind.

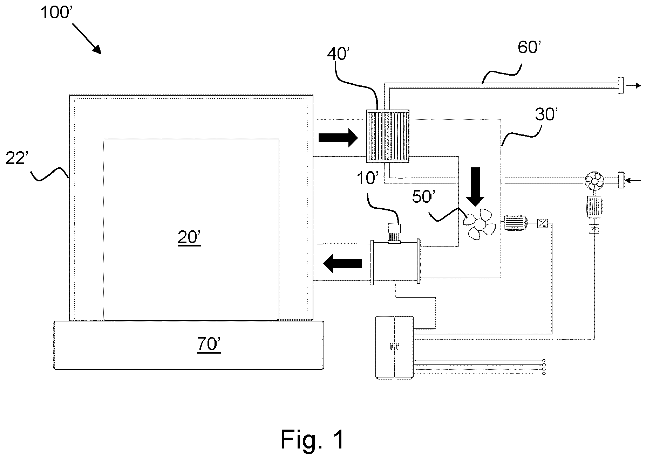

Ein gattungsgemäßer Energiespeicher 100' ist zur Veranschaulichung in Fig. 1 gezeigt. Die nachfolgenden Eigenschaften des gattungsgemäßen Energiespeichers 100' können auch bei einem erfindungsgemäßen Energiespeicher verwirklicht sein, sofern nicht ausdrücklich anders angemerkt. Der Energiespeicher 100' umfasst einen elektrischen Heizer 10', welcher mit Hilfe von elektrischer Energie ein Wärmetransferfluid erhitzt. Das Wärmetransferfluid kann insbesondere ein Gas oder Gasgemisch sein. Der Energiespeicher 100' umfasst weiterhin Wärmespeicherkörper 20', welche in einem Gehäuse 22' aufgenommen sind. Die Wärmespeicherkörper 20' können insbesondere Metallkörper oder Metallstangen sein. Das vom elektrischen Heizer 10' erhitzte Gasgemisch wird zu den Wärmespeicherkörpern 20' geleitet und erhitzt diese. Zum Entnehmen von Wärmeenergie wird das Gasgemisch (Wärmetransferfluid) zu einem Nutzenergie-Wärmetauscher 40' geleitet, wo beispielhaft Wärme auf ein anderes Fluid in einem separaten Kreislauf 60' übertragen wird. Das Wärmetransferfluid wird entlang eines Nutzenergie-Fluidkreislaufs 30' befördert, wozu eine Strömungsmaschine 50', beispielsweise ein Ventilator, vorhanden ist.

Um das beträchtliche Gewicht der Wärmespeicherkörper 20' zu tragen, ist ein Fundament 70' vorhanden, welches beispielsweise aus Beton bestehen kann.

Die Wärmespeicherkörper 20' werden zur Energiespeicherung über ein großes Temperaturintervall betrieben. Damit Energieverluste gering gehalten werden, können Wärmeisolierungen im Gehäuse 22', an den Wänden des Gehäuses 22' oder zum Fundament 70' hin vorhanden sein. Hohe Anforderungen entstehen gerade bei großen Temperaturänderungen der Wärmespeicherkörper 20', welche im Fall von Stahl beispielsweise um 600°C oder mehr innerhalb kurzer Zeit erhitzt werden können. Dabei gilt es, Schäden durch thermische Expansion, Materialermüdung und Risse zu vermeiden.

Maßnahmen zur Reduzierung von Problemen durch thermische Expansion wurden von der Anmelderin in EP 3438423 A1 sowie in der noch nicht veröffentlichten europäischen Patentanmeldung, Anmeldenummer 18 198 935.1 beschrieben. Hierbei werden Metallstangen als Wärmespeicherkörper verwendet, welche nicht direkt auf einem Fundament oder Träger aufstehen, sondern von Rohren oder anderen porösen Mitteln beabstandet zum Fundament gehalten werden. Dadurch können die Metallstangen weitgehend frei thermisch expandieren, ohne Materialspannungen zu verursachen, und es wird außerdem ein Wärmetransfer auf das Fundament verringert, da die heißen Metallstangen beabstandet vom Fundament sind.

### KURZFASSUNG

Als eine **Aufgabe** der Erfindung kann angesehen werden, ein Verfahren und einen Energiespeicher zum Speichern von elektrischer Energie als Wärme anzugeben, welcher bei kostengünstigem Aufbau ein möglichst reduziertes Risiko für Schäden durch thermische Unterschiede aufweist.

Diese Aufgabe wird durch den Energiespeicher mit den Merkmalen des Anspruchs 1 und durch das Verfahren mit den Merkmalen des Anspruchs 15 gelöst.

Vorteilhafte Varianten des erfindungsgemäßen Energiespeichers und des erfindungsgemäßen Verfahrens sind Gegenstand der abhängigen Ansprüche und werden außerdem in der folgenden Beschreibung erläutert.

Der Energiespeicher der oben genannten Art umfasst erfindungsgemäß eine Stütze und mindestens einen Abwärme-Wärmetauscher. Die Stütze wird mittels des Fundaments getragen und hält die Wärmespeicherkörper beabstandet vom Fundament. Der mindestens eine Abwärme-Wärmetauscher ist zur Kühlung des Fundaments eingerichtet, wobei der Abwärme-Wärmetauscher im Fundament oder zwischen dem Fundament und den Wärmespeicherkörpern angeordnet ist.

Bei dem Verfahren der oben genannten Art wird erfindungsgemäß der Wärmespeicherkörper mittels einer Stütze beabstandet vom Fundament gehalten, wobei die Stütze vom Fundaments getragen wird. Eine Kühlung des Fundaments (das heißt eine Wärmeableitung) erfolgt durch mindestens einen Abwärme-Wärmetauscher, der im Fundament oder zwischen dem Fundament und den Wärmespeicherkörpern angeordnet ist.

Der Abwärme-Wärmetauscher ist ein Wärmetauscher, welcher Wärmeenergie vom Fundament abführt. Durch die Stütze wird ein Wärmeübertrag auf das Fundament gegenüber dem Fall verringert, dass ein Wärmespeicherkörper (beispielsweise ein Metallblock) direkt auf dem Fundament aufliegt. Die Stütze an sich bewirkt jedoch auch eine punktuelle, ungleichmäßigere Erwärmung des Fundaments. Gerade in diesen Kontaktbereichen zwischen Stütze und Fundament kann es zu signifikanten Temperaturdifferenzen kommen, wodurch Risse im Fundament drohen, insbesondere benachbart zu Kontaktbereichen zu Stützen. Dieses Risiko wird durch den Abwärme-Wärmetauscher maßgeblich verringert. Durch den Abwärme-Wärmetauscher wird insbesondere verhindert, dass sich das Fundament an Kontaktbereichen zur Stütze stark erhitzt. Allgemein kann der Abwärme-Wärmetauscher entweder vollständig oder teilweise im Fundament angeordnet sein, auf dem Fundament aufliegen oder zumindest zwischen dem Fundament und den Wärmespeicherkörpern angeordnet sein.

### KURZBESCHREIBUNG DER FIGUREN

Ausführungsbeispiele der Erfindung werden nachstehend mit Bezug auf die beigefügten schematischen Figuren beschrieben:
- Fig. 1: ist eine schematische Darstellung eines gattungsgemäßen Energiespeichers;
- Fig. 2: ist eine schematische Darstellung eines Ausführungsbeispiels eines Energiespeichers gemäß der Erfindung;
- Fig. 3: ist eine schematische Darstellung eines weiteren Ausführungsbeispiels eines Energiespeichers gemäß der Erfindung;
- Fig. 4: zeigt einen vergrößerten Ausschnitt eines Ausführungsbeispiels eines Energiespeichers gemäß der Erfindung; und
- Fig. 5: zeigt einen vergrößerten Ausschnitt eines weiteren Ausführungsbeispiels eines Energiespeichers gemäß der Erfindung.

Gleiche und gleich wirkende Bestandteile sind in den Figuren in der Regel mit denselben Bezugszeichen gekennzeichnet.

### DETAILLIERTE BESCHREIBUNG VON AUSFÜHRUNGSBEISPIELEN

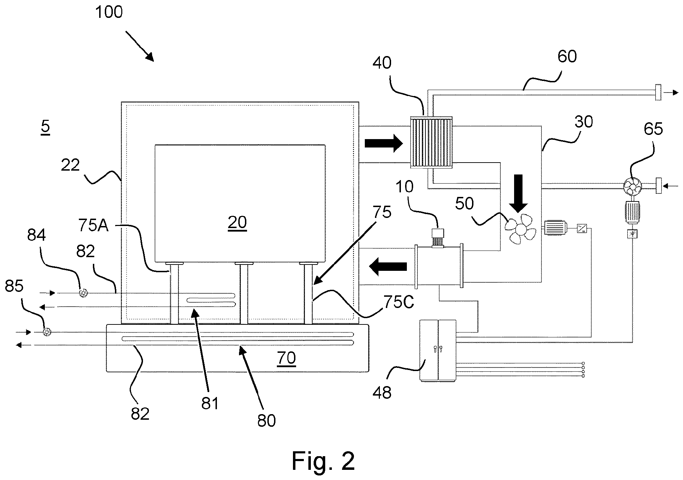

Ausführungsbeispiele eines erfindungsgemäßen Energiespeichers 100 werden zunächst mit Bezug auf Fig. 2 beschrieben. Analog zu dem eingangs beschriebenen Energiespeicher aus Fig. 1 umfasst der Energiespeicher 100: einen elektrischen Heizer 10, mit dem elektrische Energie in Wärmeenergie umgewandelt wird; Wärmespeicherkörper 20, welche zumindest einen Teil der Wärmeenergie speichern; und einen Nutzenergie-Wärmetauscher 40, mit dem Wärmeenergie nach Bedarf entnommen werden kann.

Ein Wärmetransferfluid (z.B. ein Gasgemisch) wird entlang eines Nutzenergie-Fluidkreislaufs 30 mittels einer Strömungsmaschine 50, beispielsweise eines Ventilators, befördert. Der Nutzenergie-Fluidkreislauf 30 verläuft vom elektrischen Heizer 10 über die Wärmespeicherkörper 20 zum Nutzenergie-Wärmetauscher 40. Bei einer einfachen Gestaltung kann hierauf der Kreislauf geschlossen werden. Bei anderen Gestaltungen können auch mehrere Einheiten an Wärmespeicherkörpern 20 und/oder mehrere Nutzenergie-Wärmetauscher 40 in demselben Kreislauf vorhanden sein, insbesondere abwechselnd. Die Strömungsmaschine 50 kann sich an prinzipiell beliebiger Stelle im Kreislauf befinden, im dargestellten Beispiel befindet sie sich im Nutzenergie-Fluidkreislauf 30 zwischen dem Nutzenergie-Wärmetauscher 40 und den Wärmespeicherkörpern.

Der elektrische Heizer 10 kann prinzipiell beliebig gestaltet sein, solange er elektrische Energie zum Großteil, beispielsweise zu mindestens 80%, in Wärmeenergie umwandelt. Der elektrische Heizer 10 kann insbesondere resistiv arbeiten, das heißt er wird von elektrischem Strom durchflossen und aufgrund des elektrischen Widerstands erhitzt er sich dabei. Mehrere räumlich getrennte Heizeinheiten können auch gemeinsam den elektrischen Heizer 10 bilden. In Abwandlungen des gezeigten Beispiels können der elektrische Heizer beziehungsweise seine Heizeinheiten in einem Gehäuseabschnitt der Wärmespeicherkörper 20 angeordnet sein. Insbesondere können die Heizeinheiten zwischen den Wärmespeicherkörpern 20 verteilt sein. Alternativ kann der elektrische Heizer 10 aber auch außerhalb des Gehäuseabschnitts, an anderer Stelle des Fluidkreislaufs 30 angeordnet sein, wie auch in Fig. 2 dargestellt. Das Wärmetransferfluid strömt am elektrischen Heizer 10 entlang. Ist dieser eingeschaltet, nimmt das Wärmetransferfluid somit Wärme auf, welches es darauf an die Wärmespeicherkörper 20 weitergibt.

Im Fall einer Wärmeentnahme kann der elektrische Heizer 10 ausgeschaltet sein und das Wärmetransferfluid nimmt Wärme von den Wärmespeicherkörpern 20 auf. Diese Wärme gibt das Wärmetransferfluid im Nutzenergie-Wärmespeicher 40 ab.

Der Nutzenergie-Wärmetauscher 40 kann prinzipiell beliebig gestaltet sein, solange er Wärme vom Wärmetransferfluid weg übertragen kann. Im Beispiel von Fig. 2 bewirkt er eine thermische Verbindung zwischen dem Fluidkreislauf 30 des Wärmetransferfluides und einem Arbeitsfluidkreislauf 60. Wärme kann somit auf ein Arbeitsfluid im Arbeitsfluidkreislauf 60 übertragen werden. Das Arbeitsfluid kann beispielweise über ein oder mehrere Turbinen-Generatoreinheiten oder eine andere Stromerzeugungseinrichtung elektrische Energie erzeugen. Eine Restwärme kann für Heizzwecke weitergenutzt werden oder das Arbeitsfluid wird ausschließlich zu Heizzwecken genutzt. Der Nutzenergie-Wärmetauscher 40 kann beispielsweise benachbarte oder ineinander verlaufende Rohre für Wärmetransferfluid und für Arbeitsfluid umfassen.

Die Wärmespeicherkörper 20 sind in einem Gehäuse 22 angeordnet, durch welches das Wärmetransferfluid geleitet wird. Im Beispiel von Fig. 2 strömt das Wärmetransferfluid frei durch das Gehäuse 22 an den Wärmespeicherkörpern 20 entlang. Alternativ können aber auch Rohrleitungen vorgesehen sein, durch welche das Wärmetransferfluid an den Wärmespeicherkörpern 20 entlang strömt, womit das Wärmetransferfluid nicht in direkten Kontakt mit den Wärmespeicherkörpern 20 kommt.

Die Wärmespeicherkörper 20 umfassen bei Fig. 2 Metallkörper. Alternativ können sie auch Steine umfassen, andere Festkörper, Behälter mit Flüssigkeiten oder Phasenübergangswärmespeicherkörper (bei denen beispielsweise Aluminium geschmolzen wird).

Eine Stütze 75 hält die Wärmespeicherkörper 20 beabstandet von einem Fundament 70. Im dargestellten Beispiel umfasst die Stütze 75 mehrere voneinander beabstandete Stützbeine oder -pfeiler 75A-75C. Wie dargestellt, kann die Stütze 75 auf dem Fundament 70 aufstehen, wobei ein besonders sicherer Halt ermöglicht wird, wenn ein unteres Ende der Stütze 75 bzw. ihre Stützbeine 75A-75C im Fundament aufgenommen sind.

Das Fundament 70 kann aus Beton bestehen oder Beton umfassen, wobei aber auch eine Platte aus z.B. Stahl möglich ist. Durch die Stütze 75 wird ein Abstand und somit eine gewisse Wärmeisolierung von den Wärmespeicherkörpern 20 zum Fundament 70 erreicht. Allerdings kommt es in den Kontaktbereichen zwischen den Stützbeinen 75A-75C und dem Fundament 70 zu lokal erheblichen Temperaturanstiegen. Im Fall eines Betonfundaments sollten Temperaturanstiege um ca. 20-40°C begrenzt sein. Hingegen können sich die Wärmespeicherkörper 20 bei einer Fertigung aus Stahl um viele Hundert Grad Celsius im Betrieb erhitzen. Daher ist es bedeutsam, nicht nur eine passive Isolierung mittels Stütze 75 vorzusehen, sondern auch eine aktive Wärmeabfuhr durch mindestens einen Abwärme-Wärmetauscher 80, 81.

Im Beispiel von Fig. 2 werden zwei Abwärme-Wärmetauscher 80 und 81 verwendet, wobei prinzipiell auch Ausführungsbeispiele mit nur einem dieser Wärmetauscher 80 oder 81 möglich sind. Die Abwärme-Wärmetauscher 80, 81 umfassen beispielhaft jeweils Rohrleitungen 82 für ein Fluid, mit dem Wärme vom Fundament 70 oder von der Stütze 75 weg transportiert wird. Prinzipiell sind auch Abwärme-Wärmetauscher 80, 81 denkbar, bei denen ohne Fluideinsatz ein Festkörper mit hoher thermischer Leitfähigkeit, beispielsweise Kupfer, Wärme wegführt.

Der dargestellte Abwärme-Wärmetauscher 80 verläuft innerhalb des Fundaments 70 und erstreckt sich aus diesem heraus, zu einer Umgebung 5 außerhalb des Gehäuses 22. Insbesondere kann sich der Abwärme-Wärmetauscher 80 an einer Seitenwand des Fundaments 70 aus diesem herauserstrecken oder zumindest nicht in Richtung der Wärmespeicherkörper 20. Dadurch kann der Abwärme-Wärmetauscher 80 Wärme aus dem Fundament 70 weg transportieren, z.B. zu einer in Fig. 2 nicht gezeigten Wärmesenke, insbesondere einen Wärmetauscher oder ein Wasserbad. Die Abwärme kann auch zum Beheizen anderer Komponenten des Energiespeicherts genutzt werden (nicht dargestellt). Im gezeigten Beispiel umfasst das Fundament 70 Tunnel, in welchen Rohrleitungen 82 des Abwärme-Wärmetauscher 80 verlaufen. Erstrecken sich die Stützbeine 75A-75C bis in das Fundament 70 hinein, so können die Rohrleitungen 82 zwischen den Stützbeinen 75A-75C im Fundament 70 und/oder um die Stützbeine 75A-75C herum im Fundament 70 verlaufen. Die Rohrleitungen 82 bilden einen Rohrleitungskreislauf, an welchem sich, wie dargestellt, eine Pumpe 85 befinden kann. Ist das Fundament 70 durch mehrere Betonblöcke gebildet (nicht dargestellt), kann sich der Abwärme-Wärmetauscher 80 auch in Freiräumen zwischen den Betonblöcken befinden.

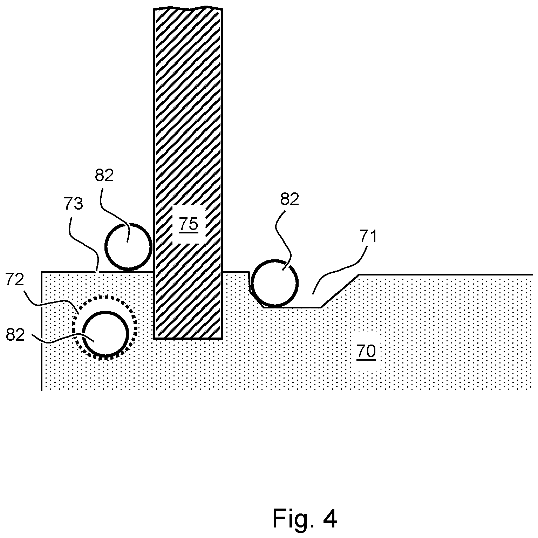

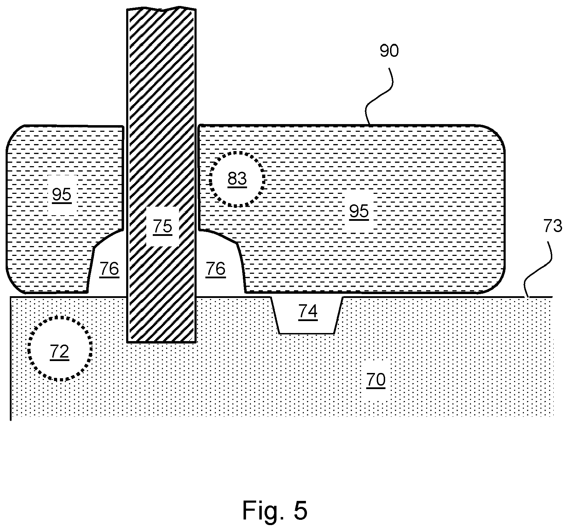

Der Abwärme-Wärmetauscher 81 verläuft zwischen den Stützbeinen 75A-75C und oberhalb des Fundaments 70. Dadurch wird der Stütze 75 Wärme entzogen, welche somit gar nicht erst das Fundament 70 erreicht. Die Figuren 4 und 5 zeigen beispielhaft, wie Bereiche um die Abwärme-Wärmetauscher 80 und 81 gestaltet sein können. Wie in Fig. 4 dargestellt, kann das Fundament 70 optional an seiner Oberseite 73, welche den Wärmespeicherkörpern 20 zugewandt ist, Aufnahmevertiefungen oder -rillen 71 haben, in welchen zumindest einige der Rohrleitungen 82 des Abwärme-Wärmetauscher 81 angeordnet sind. Wie in Fig. 4 gezeigt, können zusätzlich oder alternativ auch Rohrleitungen 82 auf der Oberseite 73 des Fundaments 70 aufliegen und die Stütze 75, insbesondere eines ihrer Stützbeine, berühren. Hierdurch können eine Kontaktfläche und somit Wärmeübertrag zwischen Rohrleitung 82 und Fundament 70 bzw. Stütze 75 erhöht werden. Als alternative oder zusätzliche Gestaltung zeigt Fig. 4 in gestrichelten Linien einen Tunnel 72 im Fundament 70, durch welchen eine der Rohrleitungen 82 verlaufen kann. Die Tunnel 72 können auch direkt eine Leitung des Abwärme-Wärmetauschers 80 bilden und von einem Fluid, also einem Gas oder einer Flüssigkeit, durchströmt werden, ohne dass zusätzliche Rohrleitungen aus z.B. Metall im Fundament 70 vorhanden wären (siehe Fig. 5).

Fig. 5 zeigt zudem ein Dämmmaterial 95, welches oberhalb des Fundaments 70 und unterhalb der Wärmespeicherkörper angeordnet ist. Das Dämmmaterial 95 kann eine oder mehrere Isoliermatten umfassen und aus einem porösen Material bestehen oder Lufteinschlüsse aufweisen, um eine stärkere Wärmeisolation bereitzustellen.

Beispielsweise kann das Dämmmaterial 95 Steinwolle sein oder umfassen. Das Dämmmaterial kann mit mehreren lateral nebeneinander angeordneten Isolierkörpern gebildet sein, wobei die Stütze in Lücken zwischen den Isolierkörpern verläuft. Alternativ können im Dämmmaterial / Isolierkörper Aussparungen gebildet sein, durch welche die Stützte verläuft. Auch kann das Dämmmaterial mehrere aufeinander gestapelte Isolierkörper umfassen. Eine Oberseite des Dämmmaterials kann optional eine Strömungsabgrenzung 90 für Wärmetransferfluid bilden, welches an den Wärmespeicherkörpern entlang strömt.

Im Dämmmaterial 95 können Tunnel 83 gebildet sind, welche Leitungen des Abwärme-Wärmetauschers 81 bilden oder in denen Rohrleitungen (nicht dargestellt) des Abwärme-Wärmetauschers 81 aufgenommen sind. Das Dämmmaterial kann weitgehend fluiddicht sein oder zum Bilden einer weitgehend fluiddichten Leitung an den Leitungsflächen mit einem Dichtungsmaterial versehen sein. Eine unvollständige Dichtung der Tunnel 83 ist weniger kritisch, wenn als Fluid ein Gas (Gasgemisch) hierdurch geleitet wird. Das Gas kann insbesondere gleich dem Wärmetransferfluid sein, welches an den Wärmespeicherkörpern entlang geleitet wird. Dadurch werden mögliche Probleme vermieden, wenn ein Teil des Gases aus den Tunneln 83 durch Poren des Dämmmaterials 95 austritt.

Fig. 5 zeigt zudem eine Rille 74 in einer Oberseite 73 des Fundaments 70. Das Dämmmaterial 95 begrenzt oder bedeckt die Rille 74 nach oben und kann insbesondere einen (fluiddichten) Kontakt zur Oberseite 73 des Fundaments 70 bereitstellen. Die Rille 74 bildet einen Kanal des Abwärme-Wärmetauschers 80, 81, womit ein Fluid in der Rille 74 durch das Fundament 70 und das Dämmmaterial 95 eingeschlossen ist.

Alternativ oder ergänzend kann auch ein Freiraum 76 einen Kanal des Abwärme-Wärmetauschers 80 oder 81 bilden. Der Freiraum 76 ist zwischen dem Dämmmaterial 95 und der Stütze 75 oder zwischen dem Dämmmaterial 95, der Stütze 75 und dem Fundament 70 gebildet. Ein durch den Freiraum 76 geleitetes Fluid berührt somit direkt die Stütze 75 und kann von dieser Wärme aufnehmen. Bei einer weiteren Variante wird eine Rohrleitung des Abwärme-Wärmetauschers 80 oder 81 im Freiraum 76 angeordnet (nicht dargestellt).

Die in den Figuren 4 und 5 veranschaulichten Gestaltungen von Kanälen oder Rohrleitungen müssen nicht in der dargestellten Kombination verwirklicht werden. Vielmehr kann auch nur eine der beschriebenen Gestaltungen an Kanälen oder Rohrleitungen verwirklicht werden, oder Mischungen aus den Gestaltungen der Figuren 4 und 5. So können eine oder mehrere der Komponenten, die in den Figuren 4 oder 5 gezeigt sind, weggelassen werden oder bei dem Ausführungsbeispiel der jeweils anderen Figur ergänzt werden.

Für eine verbesserte Wärmeaufnahme von der Stütze 75 kann auch eine Wärmetransferbrücke (nicht dargestellt) zwischen dem Abwärme-Wärmetauscher 80 oder 81 und der Stütze 75 vorhanden sein. Die Wärmetransferbrücke kann durch Metallkörper gebildet sein, beispielsweise kann jeweils mindestens ein Metallkörper ein Stützbein 75A-75C umgeben und den Abwärme-Wärmetauscher 80 oder 81 berühren. Für einen besonders hohen Wärmetransfer kann auch vorgesehen sein, dass die Stützbeine 75A-75C durch den Wärmetauscher 80 oder 81 verlaufen, womit ein Fluid im Wärmetauscher 80 oder 81 direkt die Stützbeine 75A-75C kontaktiert.

Die Stützbeine 75A-75C haben eine längliche Form und sind quer zu ihrer Längsrichtung, das heißt in lateraler / horizontaler Richtung, voneinander beabstandet. Rohrleitungen 82 des Abwärme-Wärmetauscher 81 verlaufen somit lateral zwischen den Stützbeinen 75A-75C (Fig. 2).

Das Fundament 70 befindet sich unterhalb des Gehäuses 22. Das Gehäuse 22 kann einen eigenen Boden haben, welcher auf dem Fundament 70 aufsteht. Die Stützen 75A-75C können in diesem Fall am Boden des Gehäuses 22 enden oder sich durch Öffnungen im Boden des Gehäuses 22 bis zum oder bis in das Fundament 70 erstrecken. Alternativ kann eine Bodenseite des Gehäuses 22 durch das Fundament 70 gebildet sein, womit das Gehäuse 22 selbst keine eigene Bodenplatte hat.

Der Abwärme-Wärmetauscher 81 verläuft im Beispiel von Fig. 2 innerhalb des Gehäuses 22 unterhalb der Wärmespeicherkörper 20. Er bildet einen Rohrleitungskreislauf, der sich durch Öffnungen im Gehäuse 22 nach außen erstreckt, um Wärme abzuleiten. Eine Pumpe 84 ist am Rohrleitungskreislauf und außerhalb des Gehäuses 22 vorhanden. In einer Abwandlung des Beispiels von Fig. 2 können die beiden Abwärme-Wärmetauscher 80 und 81 durch ein einziges Rohleitungssystem gebildet sein, womit eine einzige Pumpe 84 oder 85 genügen kann und eine effiziente Wärmeabfuhr ermöglicht wird.

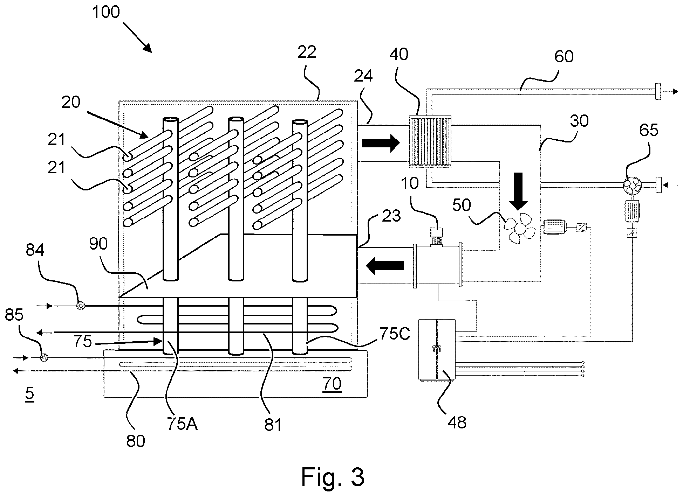

Fig. 3 zeigt ein weiteres Ausführungsbeispiel eines Energiespeichers 100 der Erfindung. Bei diesem Beispiel hält jedes Stützbein 75A-75C mehrere Metallstangen 21, insbesondere Stahlstangen. Die Wärmespeicherkörper 20 werden hier durch die Metallstangen 21 gebildet oder umfassen diese. Die Stützbeine 75A-75C erstrecken sich vertikal, während zumindest einige der Metallstangen 21 horizontal an den Stützbeinen 75A-75C gehalten sind, wozu die Metallstangen 21 beispielhaft durch Bohrungen in den Stützbeinen 75A-75C verlaufen können. Bei diesem Beispiel erfolgt ein Teil der Wärmespeicherung auch durch die Stützbeine 75A-75C, wobei aber der Großteil (z.B. mehr als 70% oder 80%) der im Betrieb gespeicherten Energie in den Wärmespeicherkörpern 20 aufgenommen wird; hierfür kann ein Gewicht der Wärmespeicherkörper mindestens 4mal oder mindestens 10mal so hoch sein wie ein Gewicht der Stützbeine 75A-75C.

Im Beispiel von Fig. 3 wird eine optionale Strömungsabgrenzung 90 innerhalb des Gehäuses 22 verwendet. Die Strömungsabgrenzung 90 befindet sich unterhalb der Wärmespeicherkörper 20 und oberhalb des Fundaments 70. Ein Strom von Wärmetransferfluid wird dadurch zumindest im Wesentlichen oberhalb der Strömungsabgrenzung 90 an den Wärmespeicherkörpern 20 geleitet und zumindest im Wesentlichen vom Fundament 70 ferngehalten. Im dargestellten Beispiel umfasst die Strömungsabgrenzung 90 eine Wand oder ein Trennblech. Diese Wand kann wie dargestellt horizontal verlaufen. Sie muss keine Abdichtung zwischen einem oberen und unteren Innenbereich des Gehäuses 22 bereitstellen, sondern kann Freiräume umfassen oder luftdurchlässig sein, um thermische Expansionen zu erlauben. Die Stütze 75 verläuft im dargestellten Beispiel durch die Strömungsabgrenzung 90 hindurch, wozu die Strömungsabgrenzung 90 entsprechende Löcher aufweisen kann. Die Strömungsabgrenzung 90 kann alternativ auch eine Isoliermatte / ein Dämmmaterial umfassen oder dadurch gebildet sein. Eine Isoliermatte kann aus einem porösen Material bestehen, welches eine Wärmedämmung bereitstellt. Die Isoliermatte begrenzt ebenfalls eine Strömung des Wärmetransferfluides (im Wesentlichen) auf den Bereich oberhalb der Isoliermatte und kann beispielsweise den Raum zwischen dem Boden des Gehäuses 22 und der in Fig. 3 gezeigten plattenartigen Strömungsabgrenzung 90 einnehmen.

Die Abwärme-Wärmetauscher 80, 81 sind unterhalb der Strömungsabgrenzung 90 angeordnet oder zumindest unterhalb einer Oberkante der Strömungsabgrenzung 90. Bei einer Gestaltung der Strömungsabgrenzung 90 als Isoliermatte kann der Abwärme-Wärmetauscher 81 auch innerhalb der Isoliermatte angeordnet sein.

Das Gehäuse 22 kann über mindestens einen Einlass 23 und mindestens einen Auslass 24 für Wärmetransferfluid verfügen. Der Einlass 23 und der Auslass 24 sind im Beispiel von Fig. 3 oberhalb der Abwärme-Wärmetauscher 80, 81 angeordnet (und bei Vorhandensein einer Strömungsabgrenzung 90 oberhalb von dieser), damit Wärmetransferfluid maßgeblich an den Wärmespeicherkörpern 20 entlang und nicht zu den Abwärme-Wärmetauschern 80, 81 hin geleitet wird.

Der Energiespeicher 100 umfasst zudem eine Rechen- oder Steuereinrichtung 48, welche beispielsweise einen Computer aufweisen kann. Die Steuereinrichtung 48 ist zur Steuerung von Komponenten des Energiespeichers 100 eingerichtet, insbesondere zum Steuern des elektrischen Heizers 10, der Strömungsmaschine 50 und/oder einer Pumpe 65 des Arbeitsfluidkreislaufs 60. Die Steuereinrichtung 48 steuert insbesondere, zu welcher Zeit netto Energie über den elektrischen Heizer 10 eingebracht wird und zu welcher Zeit netto Energie über den Nutzenergie-Wärmetauscher 40 entnommen wird.

Zudem kann die Steuereinrichtung 48 die Pumpen 84, 85 Pumpen 84, 85, die ein Fluid durch die Abwärme-Wärmetauscher 80, 81 befördern, steuern, insbesondere abhängig von einer gemessenen Temperatur. Die Temperatur kann z.B. am Fundament 70, innerhalb des Gehäuses 22, an den Abwärme-Wärmetauschern 80, 81 oder einem dadurch beförderten Fluid gemessen werden. Die Pumpen 84, 85 können mit steigender gemessener Temperatur stärker oder häufiger betrieben werden.

Klarstellend sei erwähnt, dass das Wärmetransferfluid zu dem / durch den Nutzenergie-Wärmetauscher 40 geleitet wird, aber nicht oder nur kaum zu den Abwärme-Wärmetauschern 80, 81. Eine Temperatur des Nutzenergie-Wärmetauschers 40 ist im Betrieb höher als eine Temperatur der Abwärme-Wärmetauscher 80, 81, beispielsweise mindestens 50°C oder 100°C höher.

Die vorgenannten Beispiele wurden mit zwei Abwärme-Wärmetauschern 80 und 81 beschrieben, wobei in Abwandlungen hiervon auch nur einer davon vorhanden sein kann. In dargestellten Beispielen erstreckt sich das Gehäuse 22 bis zum Fundament 70 und kann durch das Fundament 70 nach unten begrenzt oder geschlossen sein. In Abwandlungen kann das Gehäuse auch um eine Bodenplatte ergänzt sein und die Stütze kann über die Bodenplatte vom Fundament getragen werden. Für eine bessere Isolierung zum Fundament kann auch vorgesehen sein, dass das Gehäuse beabstandet vom Fundament endet und sich die Stütze vom Boden des Gehäuses oder durch den Boden des Gehäuses bis zum/ins Fundament erstreckt.

In den oben beschriebenen Ausführungsbeispielen können Rohrleitungen auch durch Kanäle ersetzt werden, worunter längliche Hohlräume in einem oder mehreren Umgebungsmaterialien verstanden werden können. Wird beispielsweise eine Rohrleitung im oder auf dem Fundament beschrieben, so kann stattdessen auch ein Kanal (länglicher Hohlraum) im Fundament gebildet sein oder zwischen dem Fundament und einer darüber befindlichen Platte oder einem Dämmmaterial. Das Fluid des Abwärme-Wärmetauschers durchströmt dann den Kanal direkt, ohne dass eine Rohrleitung aus z.B. Metall nötig wäre.

Die als zusätzliche Merkmale des Energiespeichers beschriebenen Eigenschaften ergeben bei bestimmungsgemäßer Verwendung auch Varianten des erfindungsgemäßen Verfahrens. In umgekehrter Weise kann der Energiespeicher oder dessen Steuereinrichtung auch zum Ausführen von beschriebenen Verfahrensabläufen eingerichtet sein.

Die Figurenbeschreibung betrifft beispielhafte Ausführungen. Abwandlungen hiervon sind im Rahmen der beigefügten Ansprüche möglich.

## Patentansprüche

1. Energiespeicher zum Speichern von elektrischer Energie als Wärme, umfassend:
- einen elektrischen Heizer (10) zum Umwandeln von elektrischer Energie in Wärme;
- Wärmespeicherkörper (20), welche durch die Wärme erwärmt werden;
- ein Fundament (70), über welchem die Wärmespeicherkörper (20) angeordnet sind; und
- einen Nutzenergie-Wärmetauscher (40) zum Ausgeben von Wärmeenergie aus dem Energiespeicher;
**gekennzeichnet durch**
- eine Stütze (75), welche mittels des Fundaments (70) getragen wird und die Wärmespeicherkörper (20) beabstandet vom Fundament (70) hält; und
- mindestens einen Abwärme-Wärmetauscher (80, 81) zur Kühlung des Fundaments (70), wobei der Abwärme-Wärmetauscher (80, 81) im Fundament (70) oder zwischen dem Fundament (70) und den Wärmespeicherkörpern (20) angeordnet ist.

2. Energiespeicher nach Anspruch 1,
**dadurch gekennzeichnet,**
**dass** der Abwärme-Wärmetauscher (80, 81) Rohrleitungen (82) für ein Fluid umfasst, mit dem Wärme vom Fundament (70) oder von der Stütze (75) weg transportiert wird.

3. Energiespeicher nach Anspruch 2,
**dadurch gekennzeichnet,**
**dass** das Fundament (70) Aufnahmevertiefungen (71) hat, in welchen die Rohrleitungen (82) des Abwärme-Wärmetauschers (80, 81) angeordnet sind.

4. Energiespeicher nach einem der Ansprüche 1 bis 3,
**dadurch gekennzeichnet,**
**dass** in dem Fundament (70) Tunnel (72) gebildet sind, welche Leitungen des Abwärme-Wärmetauschers (80) bilden oder in welchen Rohrleitungen (82) des Abwärme-Wärmetauschers (80, 81) aufgenommen sind.

5. Energiespeicher nach einem der Ansprüche 1 bis 4,
**dadurch gekennzeichnet,**
**dass** eine metallische Wärmetransferbrücke zwischen dem Abwärme-Wärmetauscher (80, 81) und der Stütze (75) vorhanden ist.

6. Energiespeicher nach einem der Ansprüche 1 bis 5,
**dadurch gekennzeichnet,**
**dass** die Stütze (75) mehrere Stützbeine (75A-75C) umfasst, welche zueinander lateral beabstandet sind, und
**dass** Rohrleitungen (82) des Abwärme-Wärmetauschers (80, 81) in lateraler Richtung zwischen den Stützbeinen (75A-75C) verlaufen.

7. Energiespeicher nach einem der vorherigen Ansprüche,
**dadurch gekennzeichnet,**
**dass** ein Dämmmaterial (95) oberhalb des Fundaments (70) und unterhalb der Wärmespeicherkörper (20) vorhanden ist,
**dass** im Dämmmaterial (95) Tunnel (83) gebildet sind, welche Leitungen des Abwärme-Wärmetauschers (81) bilden oder in denen Rohrleitungen (82) des Abwärme-Wärmetauschers (81) aufgenommen sind.

8. Energiespeicher nach einem der vorherigen Ansprüche,
**dadurch gekennzeichnet,**
**dass** ein Dämmmaterial (95) oberhalb des Fundaments (70) und unterhalb der Wärmespeicherkörper (20) vorhanden ist,
**dass** eine Rille (74) in einer Oberseite (73) des Fundaments (70) gebildet ist, das Dämmmaterial (95) die Rille (74) nach oben begrenzt und die Rille (74) einen Kanal des Abwärme-Wärmetauschers (80, 81) bildet, und/oder dass ein Freiraum (76) zwischen dem Dämmmaterial (95) und der Stütze (75) oder zwischen dem Dämmmaterial (95), der Stütze (75) und dem Fundament (70) einen Kanal des Abwärme-Wärmetauschers (80, 81) bildet.

9. Energiespeicher nach einem der vorherigen Ansprüche,
**dadurch gekennzeichnet,**
**dass** eine Strömungsabgrenzung (90) vorhanden ist, welche zumindest teilweise zwischen dem Fundament (70) und den Wärmespeicherkörpern (20) angeordnet ist, zum Lenken oder Begrenzen eines Wärmetransferfluidstroms oberhalb der Strömungsabgrenzung (90) entlang der Wärmespeicherkörper (20),
wobei der Abwärme-Wärmetauscher (80, 81) unterhalb der Strömungsabgrenzung (90) angeordnet ist.

10. Energiespeicher nach einem der vorherigen Ansprüche,
**dadurch gekennzeichnet,**
**dass** ein Gehäuse (22) vorhanden ist, in dem zumindest die Wärmespeicherkörper (20) angeordnet sind;
**dass** das Fundament (70) unterhalb des Gehäuses (22) angeordnet ist oder eine Bodenseite des Gehäuses (22) bildet;
**dass** einer des mindestens einen Abwärme-Wärmetauschers (81) innerhalb des Gehäuses (22) unterhalb der Wärmespeicherkörper (20) angeordnet ist und einen Rohrleitungskreislauf bildet, der sich durch das Gehäuse (22) nach außen erstreckt, um Wärme abzuleiten, und
**dass** eine Pumpe (84) am Rohrleitungskreislauf und außerhalb des Gehäuses (22) vorhanden ist.

11. Energiespeicher nach einem der vorherigen Ansprüche,
**dadurch gekennzeichnet,**
**dass** einer des mindestens einen Abwärme-Wärmetauschers (80) im Fundament (70) angeordnet ist und einen Rohrleitungskreislauf bildet, der sich aus dem Fundament (70) heraus erstreckt, um Wärme abzuleiten.

12. Energiespeicher nach einem der vorherigen Ansprüche,
**dadurch gekennzeichnet,**
**dass** das Fundament (70) ein Betonblock ist oder einen oder mehrere Betonblöcke umfasst.

13. Energiespeicher nach einem der vorherigen Ansprüche,
**dadurch gekennzeichnet,**
**dass** die Wärmespeicherkörper (20) aus Metall bestehen und Wärmetransferfluid im Gehäuse (22) an den metallischen Wärmespeicherkörpern (20) entlang geleitet wird.

14. Energiespeicher nach einem der vorherigen Ansprüche,
**dadurch gekennzeichnet,**
**dass** ein Nutzenergie-Fluidkreislauf (30) gebildet ist zum Leiten des Wärmetransferfluides entlang dem elektrischen Heizer (10), den Wärmespeicherkörpern (20) und dem Nutzenergie-Wärmetauscher (40).

15. Verfahren zum Betreiben eines Energiespeichers zum Speichern von elektrischer Energie als Wärme, umfassend:
- Umwandeln von elektrischer Energie in Wärme durch einen elektrischen Heizer (10);
- Erwärmen von Wärmespeicherkörpern (20) durch die Wärme; und
- Ausgeben von Wärmeenergie aus dem Energiespeicher durch einen Nutzenergie-Wärmetauscher (40);
wobei die Wärmespeicherkörper (20) über einem Fundament (70) angeordnet sind;
**gekennzeichnet durch**
- Halten der Wärmespeicherkörper (20) beabstandet vom Fundament (70) mittels einer Stütze (75), welche vom Fundaments (70) getragen wird; und
- Kühlung des Fundaments (70) **durch** mindestens einen Abwärme-Wärmetauscher (80, 81), der im Fundament (70) oder zwischen dem Fundament (70) und den Wärmespeicherkörpern (20) angeordnet ist.
